Europäisches Patentamt

European Patent Office

Office européen des brevets

(19)

(11) Veröffentlichungsnummer: **0 042 624
B1**

(12) **EUROPÄISCHE PATENTSCHRIFT**

(45) Veröffentlichungstag der Patentschrift:
24.10.84

(21) Anmeldenummer: 81104890.9

(22) Anmeldetag: **24.06.81**

(51) Int. Cl.³: **B 01 J 35/00**, C 02 F 1/00

(54) **Trägerkörper für einen elektrochemisch wirksamen Katalysator zur Oxidation oder Reduktion von Stoffen in wässriger Lösung.**

(30) Priorität: **25.06.80 DE 3023703**

(43) Veröffentlichungstag der Anmeldung:
**30.12.81 Patentblatt 81/52**

(45) Bekanntmachung des Hinweises auf die Patenterteilung:
**24.10.84 Patentblatt 84/43**

(84) Benannte Vertragsstaaten:
**CH FR GB IT LI NL**

(56) Entgegenhaltungen:
**DE - A - 1 596 155
DE - A - 2 556 731
DE - A - 2 710 277
DE - A - 2 713 991
FR - A - 1 354 465**

(73) Patentinhaber: **Kernforschungsanlage Jülich Gesellschaft mit beschränkter Haftung, Postfach 1913, D-5170 Jülich (DE)**

(72) Erfinder: **Faul, Wolfgang, Meyburginsel 15, D-5170 Jülich (DE)**
Erfinder: **Kastening, Bertel, Prof. Dr., Lofotenstrasse 21, D-2000 Hamburg 73 (DE)**

## Beschreibung

Die Erfindung bezieht sich auf einen Katalysatorträger für einen elektrochemisch wirksamen Katalysator zur Oxidation oder Reduktion von oxidierbaren oder reduzierbaren Stoffen in wässriger Lösung. Der Katalysator ist auf porösem Trägermaterial aufgebracht. Zur Reaktion wird die Lösung zusammen mit einem Oxidationsmittel zur Oxidation oder zusammen mit einem Reduktionsmittel zur Reduktion der Stoffe mit dem Katalysator in Berührung gebracht. Dabei strömt das Oxidations- oder Reduktionsmittel durch das poröse Trägermaterial hindurch in die Lösung ein.

Es ist bekannt, Schadstoffe in wässriger Lösung durch Oxidation oder Reduktion zu beseitigen. Solche Verfahren dienen beispielsweise zur Reinigung von Abwässern, deren Schadstoffgehalt wegen der toxischen Wirkung der in ihnen enthaltenen Schadstoffe auf niedrige Werte zu begrenzen ist. Die Entgiftung zyanidhaltiger oder sulfithaltiger Lösungen in Gegenwart von Sauerstoff an Aktivkohle als Katalysator oder unter Verwendung von als Katalysator eingesetztem Elektrodenmaterial aus Brennstoffzellen wird in DE-B-27 14 075 und DE-B-27 13 991 beschrieben. Eine katalytische Reduktion von Chromat ist die DE-B-27 14 074 angegeben. Aus DE-C-27 17 368 ist ein Reduktionsverfahren zum Abscheiden von Metallen aus Metallionen enthaltenden wässrigen Lösungen bekannt. Als Katalysatoren werden in den beiden zuletzt genannten Fällen beispielsweise Materialien eingesetzt, die für die elektrochemische Oxidation von Wasserstoff geeignet sind.

In einer Veröffentlichung der Kernforschungsanlage Jülich GmbH, «Technische Informationen Nr. 17», April 1978, wird zur katalytischen Metall-Rückgewinnung aus wässrigen Lösungen als Katalysatorträger ein Hohlzylinder aus poröser Kohle oder Graphit gezeigt. Der Hohlzylinder ist mit Platin als Katalysator imprägniert und taucht in eine metallhaltige Lösung ein. In den Hohlraum des Zylinders wird unter Druck als Reduktionsmittel Wasserstoff eingeführt. Der Wasserstoff durchdringt den imprägnierten Hohlzylinder und bewirkt, dass – zugleich mit der Oxidation des Wasserstoffs – die in der Lösung enthaltenen Metallionen am Katalysator reduziert und als Metall abgeschieden werden. Nachteile bei diesen bekannten Verfahren stellen sich dann ein, wenn die zu behandelnden Lösungen Schwebstoffe oder andere Feststoffe enthalten, die den Katalysator zusetzen. Auch ist es schwierig, das abgeschiedene Metall vom Hohlzylinder quantitativ zurückzugewinnen, ohne den Hohlzylinder dabei zu zerstören.

Aufgabe der Erfindung ist es, einen Katalysatorträger zur Oxidation oder Reduktion von in wässrigen Lösungen enthaltenen oxidierbaren oder reduzierbaren Stoffen zu schaffen, der auch bei Lösungen, die Schwebstoffe oder andere die Lösung verunreinigende Feststoffe enthalten, einen ausreichenden Umsatz und eine hohe Ausbeute gewährleistet. Auch soll am Katalysatorträger abgeschiedenes Metall in einfacher Weise zurückgewinnbar sein.

Diese Aufgabe wird bei einem Katalysatorträger der eingangs erwähnten Art gemäss der Erfindung durch die im Patentanspruch 1 angegebenen Massnahmen gelöst. Es wird ein Katalysatorträger verwendet, der auf seiner, der wässrigen Lösung zugewandten Oberfläche mit einer den Katalysator enthaltenden, feinporigen Schicht beschichtet ist. Die Schicht ist in gleicher Weise wie das Material unter der Schicht für das in die Lösung einzuführende Oxidations- oder Reduktionsmittel durchlässig und weist eine feinporigere Struktur als das darunter liegende Material auf. Diese Ausbildung führt auch bei örtlich differierendem hydrostatischem Druck, wie dies beispielsweise bei einem senkrecht in die wässrige Lösung eingetauchten Katalysatorträger der Fall ist, zu einer sehr gleichmässigen Durchgasung und Verteilung des Oxidations- oder Reduktionsmittels auf der Oberfläche des beschichteten Katalysatorträgers.

Der Aufbau des Katalysatorträgers mit einer feinporigen Schicht, die den Katalysator enthält und die von Lösung umspielt ist, auf grobporigem Trägermaterial ist für eine Gasdiffusionselektrode bekannt, vgl. DE-A-25 56 731. Der Katalysatorträger wird zur Oxidation oder Reduktion von Lösungen ohne jeden Stromdurchfluss eingesetzt. Er wird vom Oxidations- oder Reduktionsmittel durchströmt, wobei die feinporigere Schicht wegen ihres höheren Strömungswiderstandes gegenüber dem grobporigen darunter liegenden Material eine gleichmässige Durchgasung des Katalysatorträgers und eine gute Durchmischung von zu behandelnder Lösung mit dem Oxidations- oder Reduktionsmittel bewirkt.

Vorteilhaft ist auch, dass sich aus einer wässrigen Lösung gewinnbare Metalle beim Einleiten eines Reduktionsmittels in die Lösung nur an der den Katalysator enthaltenden Schicht abscheiden und so in einfacher Weise zurückgewinnbar sind. Darüberhinaus hat sich herausgestellt, dass das Einbringen des Katalysators in eine feinporige Schicht eine Beeinträchtigung der Katalyse durch in der Lösung vorhandene Katalysatorgifte vermindert. Beschichtete Katalysatorträger gemäss der Erfindung weisen längere Standzeiten auf als mit Katalysator durchsetzte Trägerkörper bekannter Art.

Als Materialien für den Katalysatorträger kommen handelsübliche, für Flüssigkeiten oder Gase durchlässige poröse Werkstoffe in Betracht, wie sie beispielsweise für Filterplatten bekannt sind. Auf solche Trägerkörper aus Kohlenstoff oder keramischem Material werden Schichten mit feinporiger Struktur aufgetragen, wobei der Katalysator bereits in der aufzutragenden Masse enthalten sein kann oder nachträglich auf die Schicht aufgebracht wird. Bevorzugt wird als feinporige Schicht eine im Patentanspruch 2 gekennzeichete Aktivkohle verwendet.

Zum Abscheiden von in wässrigen Lösungen enthaltenen Metallen, die für die Oxidation von Wasserstoff selbst katalytisch wirksam sind, enthält die feinporige Schicht als Katalysator zweckmässig das abzuscheidende Metall, Patentanspruch 3. So ist es beispielsweise vorteilhaft, für die Rückgewinnung von Platin aus wässriger Lösung auch in der Schicht Platin als Katalysator zu verwenden. Das gleiche gilt für die Gewinnung von Rhodium oder Gold, wobei Rhodium oder Gold als Katalysatoren eingesetzt werden.

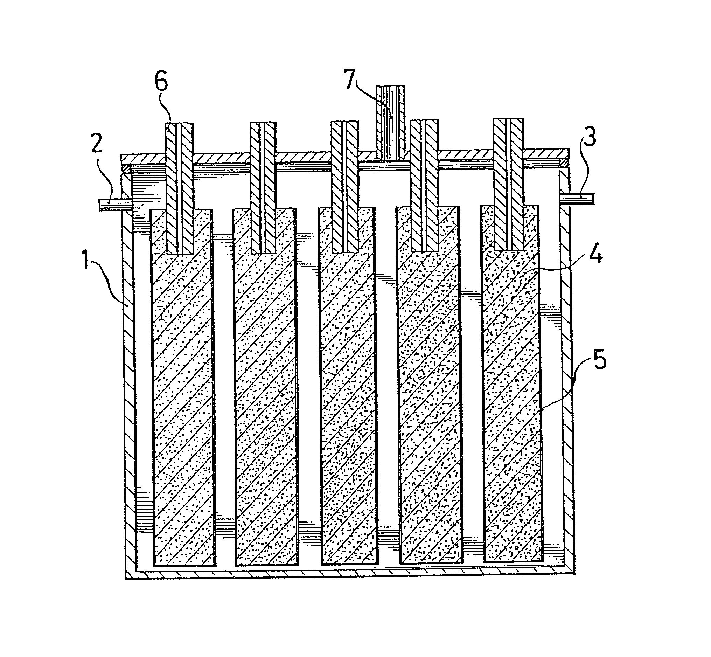

Die Erfindung wird im folgenden anhand von Ausführungsbeispielen näher erläutert. Mit einer feinporigen Schicht beschichtete Katalysatorträger in einer Anlage zur katalytischen Oxidation oder Reduktion von Lösungen sind schematisch in der Zeichnung dargestellt.

Die Zeichnung zeigt einen Behälter 1, in den über einen Zulauf 2 eine wässrige Lösung, die Schadstoffe oder gewinnbare Metalle enthält, einleitbar ist. Der Flüssigkeitsspiegel im Behälter 1 wird von einem Überlauf 3 bestimmt, über den die gereinigte Lösung abfliesst. Im Behälter sind Katalysatorträger 4 aus porösem Material angeordnet. Die Katalysatorträger tauchen vollständig in die Lösung ein und weisen auf ihrer, der Lösung zugewandten Oberfläche eine mit Katalysator imprägnierte Schicht 5 auf. Als Katalysatoren sind Platin, Rhodium, Wolframcarbid, Gold geeignet. Der jeweils eingesetzte Katalysator wird in Abhängigkeit vom zu gewinnenden Metall ausgewählt.

Im Ausführungsbeispiel sind die Katalysatorträger 4 plattenförmig ausgeführt. An einer der Schmalseiten der Katalysatorträger ist in eine Ausnehmung jeweils eine Medienleitung 6 für ein in die Katalysatorträger 4 einleitbares Oxidationsoder Reduktionsmittel eingesetzt. Das eingeleitete Medium durchdringt den porösen Katalysatorträger 4 und dessen feinporige Schicht 5 und reagiert in Anwesenheit des Katalysators mit den in der wässrigen Lösung enthaltenen Stoffen. Über die Medienleitungen 6 werden zur Oxidation oxidierbarer Stoffe in die Lösung Sauerstoff oder sauerstoffenthaltende Gase, zur Reduktion reduzierbarer Stoffe Wasserstoff oder wasserstoffenthaltende Gase eingeführt.

Der Gasdruck wird in der Medienleitung 6 zweckmässig so eingestellt, dass in die Lösung eine überstöchiometrische Gasmenge einströmt. Dies führt zu einer besseren Durchmischung der Lösung im Bereich der katalytisch aktiven Oberfläche des Katalysatorträgers, was einen hohen Umsatz ermöglicht. Aufgrund des erhöhten Strömungswiderstandes der feinporigen Schicht 5 gegenüber dem darunter liegenden grobporigen Material des porösen Katalysatorträgers 4 tritt das Gas trotz hydrostatischen Druckunterschiedes über der Plattenhöhe des Katalysatorträgers, der in die Lösung eingetaucht ist, auf der ganzen Plattenoberfläche gleichmässig aus. Die überschüssige Gasmenge steigt in der Lösung auf und wird über einen Abzug 7 aus dem Behälter 1 abgeführt. Zweckmässig ist es, die nicht benötigte Gasmenge im Kreislauf zu den Medienleitungen 6 zurückzuführen, was insbesondere bei Verwendung von Wasserstoff oder wasserstoffhaltigen Gasen von wirtschaftlicher Bedeutung ist.

Statt plattenförmiger Trägerkörper lassen sich auch beispielsweise als Zylinder oder Polyeder ausgeführte Katalysatorträger einsetzen, in die jeweils eine Zuleitung für ein Oxidations- oder Reduktionsmittel mündet.

Ausführungsbeispiel 1

Zur Herstellung eines Katalysatorträgers wurde eine Platte aus handelsüblichen porösen Graphit mit einer Abmessung von $100 \times 100 \times 20$ mm$^3$ auf ihrer Oberfläche je 1 cm$^2$ mit 10 mg Beschichtungsmaterial beschichtet. Das Beschichtungsmaterial wurde aus Aktivkohlepulver hergestellt, das zunächst bei 1100°C in Wasserstoffatmosphäre eine Stunde lang geglüht und nach dem Abkühlen in einer platinhaltigen Lösung suspendiert worden war. Der Platingehalt der Lösung war so eingestellt, dass das Aktivkohlepulver nach vollständiger Adsorption des Platins einen Platingehalt von 2 Gew.% aufwies. Das Aktivkohlepulver wurde abfiltriert, getrocknet und bei 300°C erneut für eine Stunde einem Wasserstoffstrom ausgesetzt. Dann wurde das Aktivkohlepulver in einer Lösung von Naturkautschuk in Toluol suspendiert und zu einer streichfähigen Masse verarbeitet, wobei je Gramm Katalysator enthaltendes Aktivkohlepulver 20 ml Toluol mit 0,125 g gelöstem Kautschuk vermischt wurden. Die erhaltene Masse wurde in solcher Menge auf den Katalysatorträger aufgetragen, dass nach dem Trocknen 10 mg Katalysator je 1 cm$^2$ Oberfläche vorhanden war.

Zum Anschluss für eine Medienleitung wurde in den plattenförmigen Katalysatorträger auf einer seiner Schmalseiten eine Ausnehmung von 10 mm Durchmesser und 40 mm Länge vorgesehen. In die Ausnehmung wurde eine Medienleitung von 10 mm Aussendurchmesser eingesetzt.

Der Katalysatorträger wurde in eine Zelle eingetaucht, die eine schwachsaure Lösung mit einem pH-Wert von 2 und einem Gehalt an Chromat entsprechend 0,5 g Chrom pro Liter (Cr/1) enthielt, und mit Wasserstoff in einer Menge von 0,5 Liter pro Stunde begast. Am Katalysatorträger wurde das Chromat der Lösung zu Chrom (III)· reduziert. Bei einem Durchsatz von 500 ml Lösung je Stunde konnte am Überlauf der Zelle nur noch ein Chromatgehalt unter 0,1 mg je Liter festgestellt werden.

Ausführungsbeispiel 2

Eine Platte von $250 \times 250 \times 20$ mm$^3$ aus handelsüblichem porösen Graphit wurde entsprechend Ausführungsbeispiel 1 mit einer Beschichtungsmasse aus Aktivkohle beschichtet, die kein Platin enthielt. Zum Aufbringen des Katalysators wurden die aus der Platte herausgeschnittenen Katalysatorträger an Medienleitungen und über einen in der Zeichnung nicht dargestellten elektrischen Anschluss an eine Spannungsquelle angeschlossen. Die Katalysatorträger wurden in eine platinhaltige Lösung eingetaucht. Bei einer Stromdichte von 5 mA/cm$^2$ Oberfläche wurde Platin in einer Menge von 0,5 mg/cm² Plattenoberfläche abgeschieden.

Die Katalysatorträger wurden in die im Ausführungsbeispiel 1 angegebene chromathaltige Lösung eingetaucht. Bei einem Durchsatz von 3 l Lösung je Stunde konnte der Chromatgehalt der Lösung am Überlauf unter 0,1 mg je Liter gesenkt werden.

Ausführungsbeispiel 3

Eine Platte aus handelsüblichem porösen Graphit mit einer Abmessung von 100 × 100 × 20 mm³ wurde wie im Ausführungsbeispiel 2 mit Aktivkohle beschichtet, die in Wasserstoffatmosphäre bei 1000°C eine Stunde lang geglüht worden war, und zur Imprägnierung mit Platin in eine platinhaltige Lösung eingetaucht. Die Platte wurde mit Wasserstoff begast, wobei sich auf der Aktivkohlenschicht Platin in einer Menge von 0,5 g je 1 cm² Oberfläche abschied.

Bei Verwendung eines aus dieser Platte hergestellten Katalysatorträgers in einer Zelle zur Reduktion von Chromat in einer Lösung wie sie im Ausführungsbeispiel 1 angegeben ist, konnte bei einem Chromatgehalt am Überlauf unter 0,1 mg je Liter eine Lösungsmenge von 800 ml je Stunde durch die Zelle durchgesetzt werden.

Ausführungsbeispiel 4

Eine Platte aus handelsüblichem porösem Graphit mit kreisförmigem Querschnitt von 3 cm Durchmesser und einer Dicke von 3 mm wurde als Katalysatorträger einseitig mit Katalysator entsprechend Ausführungsbeispiel 1 beschichtet. Der Katalysatorträger wurde in eine Kupfersulfat enthaltende Lösung mit einem Gehalt von 1 g Kupfer je Liter eingetaucht und von seiner nicht beschichteten Seite her mit Wasserstoff begast. Dabei schied sich auf der beschichteten Oberfläche des Katalysatorträgers kontinuierlich Kupfer ab. Nach einer Belegung von 2 g Kupfer je 1 cm² Oberfläche lag die Ausscheidungsgeschwindigkeit noch über 50% der Anfangsgeschwindigkeit.

Ausführungsbeispiel 5

Ein wie im Ausführungsbeispiel 4 ausgeführter Katalysatorträger aus handelsüblichem porösen Graphit mit 10 cm Durchmesser und 5 mm Dicke wurde einseitig mit Katalysator entsprechend Ausführungsbeispiel 1 beschichtet, in eine Rhodium enthaltende Lösung getaucht und in gleicher Weise wie im Ausführungsbeispiel 4 begast. Die Lösung enthielt 1 g Rhodium je Liter.

Nach 6 Stunden Behandlung waren 200 ml der Lösung auf einen Gehalt von 50 mg Rhodium je Liter abgereichert. Das Metall hatte sich auf der Aktivkohlenoberfläche des Katalysatorträgers abgeschieden.

Ausführungsbeispiel 6

Eine poröse Graphitplatte mit kreisförmigem Querschnitt von 10 cm Durchmesser und 5 mm Dicke wurde entsprechend den vorangegangenen Ausführungsbeispielen 4 und 5 beschichtet und nach Eintauchen in eine schwachsaure Lösung, die 1 g Chromat und 0,1 g Kupfer je Liter enthielt, von der Rückseite her mit Wasserstoff begast. Dabei wurde zugleich Cr (VI) zu Cr (III) reduziert und metallisches Kupfer auf der Oberfläche abgeschieden. Bei einer Endkonzentration von weniger als 0,1 mg je Liter für beide Bestandteile der Lösung konnten am Katalysatorträger 300 ml Lösung je Stunde umgesetzt werden.

Ausführungsbeispiel 7

Ein Katalysatorträger in der Form eines an einer seiner Stirnseiten geschlossenen Hohlzylinders aus handelsüblichem für Keramikfilter verwendeten, porösen keramischen Material mit einem äusseren Durchmesser von 47 mm und einem Innendurchmesser von 20 mm sowie einer Länge von 135 mm wurde mit einer Platin enthaltenden Aktivkohlenschicht wie im Ausführungsbeispiel 1 beschichtet. Zur Herstellung des Beschichtungsmaterials wurde handelsübliches, bei 1000°C wasserdampfaktiviertes Aktivkohlepulver verwendet.

Der Katalysatorträger wurde in eine im Ausführungsbeispiel 1 angegebene chromathaltige Lösung eingetaucht und von seiner Innenseite her mit Wasserstoff durchgast. Bei einem Durchsatz von 500 ml Lösung je Stunde konnte die Lösung bis auf einen Chromatgehalt unter 0,1 mg je Liter abgereichert werden.

Ausführungsbeispiel 8

Katalysatorträger aus quadratischen Platten aus handelsüblichem porösen Graphit mit einer Abmessung von 110 × 110 × 20 mm³ wurden wie im Ausführungsbeispiel 7 angegeben beschichtet. Die Katalysatorträger wurden in eine Lösung eingetaucht, die mit Natronlauge auf einen pH-Wert von 12 eingestellt worden war und Natriumsulfit in einer Konzentration von 10 g pro Liter enthielt. Alle Katalysatorträger wurden mit Luft begast. In einer Stunde konnte die Natriumsulfitkonzentration der Lösung bei einem Umsatz von 3 cm³ Lösung pro cm² Katalysatorträgeroberfläche um 20% gesenkt werden.

Ausführungsbeispiel 9

Ein Katalysatorkörper aus porösem Graphit wie im Ausführungsbeispiel 8 wurde in eine Lösung eingetaucht, die 50 g Natriumsulfit je Liter enthielt, und mit Luft begast. Die Lösung war in gleicher Weise wie im Ausführungsbeispiel 8 auf einen pH-Wert von 12 eingestellt. Bei einem Umsatz von 3 cm³ Lösung pro cm² Plattenoberfläche konnte die Natriumsulfitkonzentration nach ca. 3 Stunden auf 50% des Ausgangswertes gesenkt werden.

Ausführungsbeispiel 10

Ein Katalysatorträger aus porösem Graphit wie im Ausführungsbeispiel 8 wurde in eine Lösung eingetaucht, die 50 g Natriumsulfit je Liter enthielt und auf einen pH-Wert von 6 eingestellt war. Unter Begasung mit Luft wurde bei einem Umsatz von 3 cm³ Lösung pro cm² Plattenoberfläche die Natriumsulfitkonzentration der Lösung in einer Stunde um 22% gesenkt.

Ausführungsbeispiel 11

Eine Platte aus handelsüblichem, porösen Graphit mit kreisförmigem Querschnitt von 2 cm Durchmesser und einer Stärke von 3 mm wurde als Katalysatorträger auf einer ihrer Seiten mit 10 mg Beschichtungsmaterial je cm² Oberfläche entsprechend Ausführungsbeispiel 1 beschichtet. An dem Katalysatorträger war ein elektrischer Kontakt zum Anschluss an eine Stromquelle angebracht. Der Katalysatorträger wurde in eine 0,1 molare Schwefelsäurelösung getaucht, die Raumtemperatur aufwies und von seiner nicht beschichteten Seite her mit Wasserstoff begast.

Es wurde die anodische Oxidation von Wasserstoff in der katalytisch aktiven Oberfläche des Katalysatorträgers in Abhängigkeit von einem gegen eine Quecksilbersulfat-Referenzelektrode gemessenen elektrischen Potential bestimmt. Bei einem Potential von –400 Millivolt gegen die Referenzelektrode betrug der Strom der anodischen Wasserstoffoxidation 15 Milliampere.

Unter Beibehaltung der Wasserstoffdurchgasung wurde der Katalysatorträger durch Anschliessen des elektrischen Kontaktes der Platte an eine Stromquelle auf ein Potential von +200 Millivolt gemessen gegen die Referenzelektrode gebracht. Bei dieser anodischen Aktivierung der katalytisch aktiven Schicht des Katalysatorträgers betrug der Strom für die anodische Wasserstoffoxidation etwa 150 Milliampere. Mit elektrochemischer Aktivierung der katalytisch aktiven Schicht konnte somit die Wasserstoffoxidation unter den angegebenen Bedingungen auf das Zehnfache des Wertes ohne anodische Aktivierung gesteigert werden.

Ausführungsbeispiel 12

An einer Platte aus handelsüblichem, porösen Graphit mit kreisförmigem Querschnitt von 2 cm Durchmesser und einer Dicke von 3 mm, die einseitig mit Katalysator entsprechend Ausführungsbeispiel 1 beschichtet worden war, wurde bei Raumtemperatur aus einer 0,1 molaren Schwefelsäurelösung mit einem Kupfergehalt von 0,5 g je Liter metallisches Kupfer bis zu einer Menge von 100 mg je cm² Plattenoberfläche abgeschieden. Dabei betrug der Strom für die anodische Wasserstoffoxidation bei einem Potential von –500 Millivolt gemessen gegen eine Quecksilbersulfat-Referenzelektrode bei Beginn der Kupferabscheidung 105 Milliampere, nach der Kupferabscheidung 95 Milliampere.

Zur elektrochemischen Regeneration des Trägerkörpers wurde dieser in eine Lösung mit guter elektrischer Leitfähigkeit, im Ausführungsbeispiel in eine 1-molar Schwefelsäure eingetaucht und über einen elektrischen Kontakt an der Platte und Verbindung mit einer Stromquelle auf ein Potential von ± 0 Millivolt gegen die vorgenannte Referenzelektrode gebracht. Das Kupfer wurde am Trägerkörper anodisch aufgelöst und an einer Kupferkathode wieder abgeschieden. Nach dieser Regeneration des Trägerkörpers betrug der Strom für die anodische Wasserstoffoxidation bei einem Potential von –500 Millivolt gemessen gegen die Referenzelektrode wieder 100 Milliampere.

**Patentansprüche**

1. Verwendung eines Katalysatorträgers aus porösem Material, das von Gasen durchsetzbar ist, mit einer die Oberfläche des Katalysatorträgers überziehenden den Katalysator enthaltenden Schicht, die eine feinporigere Struktur als das Material unter der Schicht aufweist und die von einer Lösung umspült ist, zur Oxidation oder Reduktion von oxidierbaren oder reduzierbaren Stoffen in wässriger Lösung mit einem gasförmigen Oxidations- oder Reduktionsmittel, das durch das poröse Material und die feinporige Schicht hindurch in die wässrige Lösung austritt.

2. Verwendung eines Katalysatorträgers nach Anspruch 1, dessen feinporige Schicht aus bei 1100°C in Wasserstoffatmosphäre eine Stunde lang geglühter Aktivkohle besteht, die mit Katalysator imprägniert ist.

3. Verwendung eines Katalysatorträgers nach Anspruch 1 oder 2, dessen feinporige Schicht als Katalysator mit einem aus der Lösung abzuscheidenden Metall imprägniert ist.

**Claims**

1. Use of a catalyst support made of porous material through which gases can pass, having a coating which covers the surface of the catalyst support and which contains the catalyst and which has a more fine-pored structure than the material below the coating and which has a solution flowing round it, for oxidation or reduction of oxidisable or reducible substances in aqueous solution with a gaseous oxidising or reducing agent which passes out through the porous material and the fine-pored coating into the aqueous solution.

2. Use of a catalyst support according to claim 1, whose fine-pored coating comprises activated carbon which has been annealed for one hour at 1100°C in a hydrogen atmosphere and which is impregnated with catalyst.

3. Use of a catalyst support according to claim 1 or 2, whose fine-pored coating is impregnated with, as catalyst, a metal which is to be separated out from the solution.

**Revendications**

1. Utilisation d'un support de catalyseur en substance poreuse qui peut être traversé par des gaz et qui a une couche, contenant le catalyseur, appliquée en revêtement à la surface du support de catalyseur, présentant une structure à grains plus fins que la substance sous-jacente à la couche et qui baigne dans une solution, pour l'oxydation ou pour la réduction de substances oxydables ou réductibles en solution aqueuse par un agent d'oxydation ou de réduction gazeux, qui sort par la substance poreuse et par la couche à grains fins dans la solution aqueuse.

2. Utilisation d'un support de catalyseur suivant la revendication 1, dont la couche à pores fins est constituée de charbon actif recuit pendant une heure à 1100°C sous atmosphère d'hydrogène, et imprégnée de catalyseur.

3. Utilisation d'un support de catalyseur suivant la revendication 1 ou 2, dont la couche a pores fins est imprégnée comme catalyseur d'un métal précipitant dans la solution.